# EUROPÄISCHE PATENTSCHRIFT

(11) **EP 3 123 309 B1**
(45) Veröffentlichungstag und Bekanntmachung des Hinweises auf die Patenterteilung: **16.05.2018**
(21) Anmeldenummer: 15711427.3
(22) Anmeldetag: 13.03.2015
(51) Int. Cl.: G06F 9/44, G06F 17/30, G06F 3/048, G06F 3/01, G06F 3/0484, G06F 3/0488, G06F 3/0482

(54) **VERFAHREN UND VORRICHTUNG ZUM BEREITSTELLEN EINER AUSWAHLMÖGLICHKEIT WÄHREND EINES AUFBAUS EINES ANZEIGEINHALTS**
METHOD AND DEVICE FOR PROVIDING A SELECTION POSSIBILITY WHILE PRODUCING DISPLAY CONTENT
PROCÉDÉ ET DISPOSITIF POUR FOURNIR UNE POSSIBILITÉ DE SÉLECTION PENDANT LA CONSTRUCTION D'UN CONTENU D'AFFICHAGE

(30) Priorität: 22.03.2014 DE 102014004177
(43) Veröffentlichungstag der Anmeldung: 01.02.2017
(73) Patentinhaber: Audi AG, 85045 Ingolstadt (DE)
(72) Erfinder: KÜHNE, Marcus, 92339 Beilngries (DE)
(86) Internationale Anmeldenummer: PCT/EP2015/000567
(87) Internationale Veröffentlichungsnummer: WO 2015/144294

(56) Entgegenhaltungen:
- EP-A1- 2 538 347
- EP-A1- 2 584 445
- DE-A1-102009 015 350
- US-A- 6 133 914
- US-A1- 2012 017 182

## Beschreibung

Die Erfindung betrifft ein Verfahren und Vorrichtung zum Bereistellen einer Auswahlmöglichkeit während eines Aufbaus eines Anzeigeinhalts auf einer Anzeigefläche einer Anzeigevorrichtung und eine Anzeigevorrichtung. Ferner betrifft die Erfindung ein Fahrzeug mit installierter Anzeigevorrichtung.

Bei der Bedienung von berührungssensitiven Schnittstellen auf Bildschirmoberflächen, auch touch-basierte Interfaces genannt, ist ein versehentliches Auslösen einer Auswahl anhand von Bildschirminhalten, insbesondere von Verknüpfungen, beispielsweise in Form von einem Link, häufig unzuverlässig. Dies ist insbesondere dann der Fall, wenn sich gerade eine Bildschirmoberfläche aufbaut, die sich innerhalb einer kurzen Zeitspanne ändert, so dass zwischen der Entscheidung für eine Funktionsauslösung eines Benutzers und dem eigentlichen Berühren der berührungssensitiven Schnittstelle sich der Bildschirminhalt zwischenzeitlich verändert hat. Auf diese Weise wird eine Fehlauslösung verursacht, da der Benutzer die Stelle der Bildschirmoberfläche berührt, an der er die Verknüpfung gesehen hat, diese aber an einer anderen Stelle auf der Bildschirmoberfläche positioniert ist. Falls an der Position, die der Benutzer dennoch berührt eine andere Verknüpfung ist, wird diese ungewollt ausgewählt. Ist die Verknüpfung ein Link, so wird beispielsweise eine Internetseite aufgerufen, die nicht vom Benutzer gewollt ausgewählt wurde. Mit anderen Worten, wenn ein Benutzer während eines aktiven Aufbaus bzw. während eines Ladens einer Internetseite einen Link aktivieren möchte, kann es zu Schwierigkeiten kommen, wenn sich der Link in seiner Position auf der Bildschirmoberfläche infolge eines Aufbauprozesses noch ändert und ein Finger des Benutzers die Bedienung an der zuerst vorhandenen Position des Links vornimmt.

Ist an dieser ersten Position kein weiterer Link in der Zwischenzeit vorhanden, kommt es zu keiner Funktionsauslösung, was der beste Fall wäre. Allerdings kann es auch dazu kommen, dass an der Position des ursprünglichen Links nun ein anderer Link vorhanden ist, der durch den Benutzer aktiviert wird, obwohl der Benutzer den zuvor an dieser Position angezeigten Link auswählen wollte. Somit wird unbeabsichtigt ein nicht gewünschter Link ausgewählt.

Aus EP 2 538 347 A1 ist ein Datenverarbeitungsvorrichtung zur elektronischen Verarbeitung von Daten bekannt, die eine berührungsempfindliche Fläche aufweist. Mit der berührungsempfindlichen Fläche können Eingaben und Wiedergabe von Verknüpfungen einer auf einer graphischen Benutzeroberfläche gesteuert werden. Hierbei können auswählbare Listeneinträge auf der berührungssensitiven Fläche dargestellt werden. Bei einer verbleibenden Berührung auf der berührungssensitiven Fläche durch einen Benutzer werden die Informationen repräsentierenden Daten angezeigt, die mit einem aktuellen Listeneintrag verknüpft sind, wobei eine verzögerte Ausführung der Anzeige vorgesehen sein kann.

Die DE 10 2009 015 350 A1 offenbart ein Kraftfahrzeug mit einer Internetanbindung und einem auf einer Recheneinheit des Kraftfahrzeugs ausführbaren Browserprogramm zur Anzeige von Internetseiten, mittels welchem Internetseiten anhand von Internetadressen aufrufbar und auf einer Anzeigeeinheit des Kraftfahrzeugs anzeigbar sind. Das Browserprogramm ist wahlweise in einem ersten Anzeigemodus und in zumindest einem sich von dem ersten Anzeigemodus unterscheidenden zweiten Anzeigemodus betreibbar und das Browserprogramm ist geeignet, eine von einem Bediener über zumindest ein Bedienelement des Kraftfahrzeugs vorgenommene Auswahl des ersten oder des zweiten Anzeigemodus entgegenzunehmen, im ersten Anzeigemodus eine aufgerufene Internetseite mit allen üblicherweise zur optischen Anzeige bestimmten Inhalten anzuzeigen, im zweiten Anzeigemodus eine aufgerufene Internetseite in einer reduzierten Anzeigefassung anzuzeigen, die im Wesentlichen aus den Hyperlinks besteht, die in der aufgerufenen Internetseite enthalten sind.

Eine Verzögerung der Anzeige kann eine Lösung für das oben genante Problem sein. Diese Möglichkeit verzögert jedoch zusätzlich den weiteren Seitenaufbau der Bildschirmanzeige, was unerwünscht ist, denn der Inhalt sollte möglichst schnell vollständig angezeigt werden.

Somit stellt sich die Aufgabe, bei einer sich aufbauenden Anzeige eine sichere Auswahl eines Anzeigeinhalts treffen zu können, ohne dass hierdurch der Vorgang des Seitenaufbaus verzögert wird.

Diese Aufgabe wird mit einem Verfahren zum Bereistellen einer Auswahlmöglichkeit während eines Aufbaus eines Anzeigeinhalts auf einer Anzeigefläche einer Anzeigevorrichtung gelöst. Hierbei weist das Verfahren ein Anzeigen eines vorläufigen Anzeigeinhalts an einer vorläufigen Position auf der Anzeigefläche auf, wobei der Anzeigeinhalt mindestens eine Auswahlmöglichkeit aufweist. Ferner weist das Verfahren ein Erkennen eines Auswählens aus mindestens einer der Auswahlmöglichkeiten an der vorläufigen Position auf der Anzeigefläche und ein Anzeigen eines endgültigen Anzeigeinhalts an einer endgültigen Position auf der Anzeigefläche auf. Weiterhin ist vorgesehen, dass das Auswählen aus mindestens einer der Auswahlmöglichkeiten an der vorläufigen Position als eine Auswahl erkannt wird, während der endgültige Anzeigeinhalt bereits an der endgültigen Position auf der Anzeigefläche angezeigt wird.

An der vorläufigen Position werden beispielsweise Inhalte angezeigt, die wenig Speicher- und Übertragungsreserven benötigen. Inhalte, wie beispielsweise Grafiken, werden erst an der endgültigen Position angezeigt. Es ist demnach möglich, bereits eine Auswahl durch Berührung der Bildschirmoberfläche oder Anzeigeoberfläche zu treffen, obwohl noch nicht der vollständige Inhalt der Bildschirmanzeige angezeigt wird. Ein Positionssprung zwischen vorläufiger Position und endgültiger Position entsteht dadurch, dass bei der endgültigen Position weitere Inhalte angezeigt werden, die in der vorläufigen Position noch nicht vorhanden waren. Obwohl ein Positionssprung stattfindet kann eine Auswahl sicher getroffen werden, da der vorläufig angezeigte Inhalt an der Position ausgewählt werden kann, an der er zuerst erschienen ist, obwohl der Bildaufbau weiter fortschreitet und der bisherige angezeigte Inhalt bereits auf einer endgültigen Position angezeigt wird. Dies bedeutet, dass man bei einem Positionssprung der Auswahlmöglichkeit während eines Bildschirmaufbaus oder Anzeigenaufbaus eine Fehlauslösung vermeidet während gleichzeitig der Bildaufbau zeitlich nicht verzögert wird.

Die Anzeigefläche kann hierbei eine physikalisch vorhandene Anzeigefläche sein, wie beispielsweise eine Bildschirmoberfläche eines Computers oder eines mobilen Gerätes, wie einem Notebook oder einem Smartphone. Auch ist es möglich, dass die Anzeigefläche eine virtuelle Anzeigefläche ist, die beispielsweise durch eine Projektion gewonnen wird und frei im Raum für einen Benutzer sichtbar ist, ohne dass physikalisch eine Fläche bereitgestellt werden muss. Auch sind Ausführungsformen möglich, bei denen die Fläche physikalisch oder virtuell gekrümmt ist. Ferner können in der Fläche auch dreidimensionale Geometrien sichtbar sein, so dass beispielsweise Auswahlmöglichkeiten in Form von dreidimensionalen Bedienelementen sichtbar sind.

Ferner ist es auch möglich, dass der Anzeigeinhalt eine Vielzahl von Auswahlmöglichkeiten aufweist, die als Auswahlliste auf der Fläche angezeigt wird. Hierbei werden die Auswahlmöglichkeiten beispielsweise in Form einer Liste bereitgestellt, wie einer Link-Liste, die auf weitere Anzeigeinhalte jeweils eine Verknüpfung bereitstellt. Hierbei kann es sich um eine Verknüpfungsliste oder Link-Liste handeln, wobei jeder Link beispielsweise eine Verbindung zu einer vorbestimmten Webseite im Internet herstellen kann. Insgesamt kann vermieden werden, dass ein Nutzer durch einen Positionsversprung von einer oder mehrerer Auswahlmöglichkeiten einen falschen Link aktiviert.

Ferner kann vorgesehen werden, dass die Auswahlmöglichkeit eine Verknüpfung ist, bei dessen Berührung weitere Anzeigeinhalte eingezeigt werden. Eine solche Verknüpfung ist beispielsweise ein Link zum Auswählen einer Internetseite oder ein Auswahlknopf zum Bedienen eines Gerätes.

Mit Vorteil kann vorgesehen werden, dass innerhalb einer vorbestimmten Zeitdauer das Auswählen an der vorläufigen Position als Auswählen der Auswahlmöglichkeit erkannt wird. Diese vorbestimmte Zeitdauer hat den Vorteil, dass wenigstens innerhalb einer bestimmten Reaktionszeit eines Nutzers eine Fehlauslösung vermieden werden kann.

Mit Vorteil beträgt die vorbestimmte Zeitdauer 0,5 bis 1,0 Sekunden. Hierbei kann vorzugsweise 0,8 Sekunden vorgesehen werden. Es wird somit ein zeitlicher Abstand bzw. eine zeitliche Verzögerung zwischen dem Anzeigen des Anzeigeinhaltes an der vorläufigen Position und dem Erkennen der Auswahl an der vorläufigen Position 0,5 bis 1,0 Sekunden vorgesehen.

In einer Ausführungsform kann vorgesehen werden, das Auswählen durch eine Berührung der Fläche durchgeführt wird. Eine solche Auswahl ist beispielsweise möglich bei einer Verwendung einer berührungssensitiven Anzeigevorrichtung.

In einer weiteren Ausführungsform kann vorgesehen werden, dass das Auswählen berührungslos durchgeführt wird. Hierbei kommen Techniken wie beispielsweise das so genannte "Eye Tracking" zur Anwendung.

Ferner wird die Aufgabe der Erfindung mit einer Anzeigevorrichtung mit sich zeitlich aufbauendem Anzeigeinhalt gelöst. Hierbei weist die Anzeigevorrichtung eine Anzeigefläche zum Anzeigen des Anzeigeinhalts und eine Steuereinheit zum Erkennen einer Auswahl auf der Anzeigefläche auf. Ferner ist vorgesehen, dass ein vorläufiger Anzeigeinhalt an einer vorläufigen Position auf der auf der Anzeigefläche anzeigbar ist, wobei der Anzeigeinhalt mindestens eine Auswahlmöglichkeit aufweist. Weiterhin ist vorgesehen, dass mit der Steuereinheit eine Auswahl aus mindestens einer der Auswahlmöglichkeiten erkennbar ist, wobei ein endgültiger Anzeigeinhalt an einer endgültigen Position auf der Anzeigefläche anzeigbar ist. Weiterhin ist vorgesehen, dass mit der Steuereinheit eine Auswahl mindestens einer der Auswahlmöglichkeiten an der vorläufigen Position als Auswählen erkennbar ist, während der endgültige Anzeigeinhalt bereits an der endgültigen Position auf der Anzeigefläche angezeigt wird.

In einer Ausführungsform kann vorgesehen werden, dass die Anzeigevorrichtung eine berührungssensitive Anzeigevorrichtung ist. Als berührungssensitive Anzeigevorrichtung kann eine resistiv wirkende Anzeigevorrichtung oder ein Display verwendet werden. Auch kann mit Vorteil eine kapazitiv wirkende Anzeigevorrichtungen oder ein Display verwendet werden. Hierbei wird eine Berührung der Anzeigefläche der Anzeigevorrichtung durch Überwachen eines Widerstandes bzw. einer Kapazität erkannt. Diese Anzeigevorrichtungen oder Displays können über eine kapazitive oder resistive Sensorik verfügen. Eine Auswertung kann in einem system-individuellen Controller oder einer Steuereinheit erfolgen, als Teil eines mobilen Endgerätes bzw. eines Mobile Device. Ferner ist es auch möglich, dass eine Auswertung innerhalb eines komplexeren Systems stattfindet, das ortsfest oder nicht ortsgebunden ist. Es ist daher auch möglich, dass eine Auswertung einer Auswahl und eine anschließende Bereitstellung der ausgewählten Inhalte über eine Cloud-Lösung bereitgestellt werden. Hierbei kann beispielsweise eine Steuereinheit als Cloud-Prozesseinheit ausgebildet sein.

In einer weiteren Ausführungsform kann vorgesehen werden, dass die Anzeigevorrichtung eine Projektionsvorrichtung ist. Eine solche Projektionsvorrichtung stellt eine Projektion als Anzeigefläche bereit, die räumlich nicht begrenzt ist und sehr flexibel in ihrer Anzeigefläche an die Umgebung anpassbar ist. Eine Projektion kann beispielsweise auch mit Hilfe von einer Brille, die ein Nutzer während einer Auswahl trägt oder ähnliches bereitgestellt werden.

Ferner ist es möglich, dass die Auswahl berührungslos durchgeführt wird. Hierbei kommen Techniken wie beispielsweise das so genannte "Eye Tracking" zur Anwendung. Eine bevorzugte Ausführungsform sieht vor, dass die Auswahl mit einem kamerabasierten Eye Tracking System ermöglicht wird. Dies erfolgt beispielsweise auf die Weise, dass ein Nutzer ein Auswahlobjekt oder eine Auswahlfläche mit seinen Augen fixiert. Darauf überblendet eine neue Einblendung die erste Einblendung oder Projektion. Zuvor wird der vorher sichtbare Auswahlpunkt aktiviert, sofern die Auswahlbestätigung innerhalb eines vorbestimmten Zeitraums erfolgt ist und man von einer Fehlauslösung ausgehen kann, d.h. von einer Auslösung, die eine nicht gewollte Auswahl aktivieren würde.

Ferner wird die Aufgabe der Erfindung mit einem Fahrzeug gelöst, das mit einer installierten Anzeigevorrichtung ausgestattet ist, wobei die Anzeigefläche beispielsweise Teil eines Informationssystems in dem Fahrzeug ist. Über die berührungssensitive Bedienoberfläche kann beispielsweise Teil eines Navigationsgerätes, Teil einer Audioanlage oder eine Kombination hiervon sein.

Es wird mit der Erfindung insgesamt eine verbesserte Bedienung, insbesondere eine Touch-Bedienung oder eine berührungslose Bedienung, bereitgestellt, bei der eine stabile Interaktion bei Nutzung aufbauender Inhalte sichergestellt wird. Die Anzeigeoberfläche kann Teil einer fest installierten Vorrichtung sein, wie beispielsweise ein Computer oder ein Teil eines Informationssystems für Touristen an einer Sehenswürdigkeit oder ein mobiles Endgerät sein, wie beispielsweise ein Notebook, ein Smartphone oder eine Brille. Die Einsatzmöglichkeiten des Verfahrens und der Bedienoberfläche sind vielfältig.

Es sei darauf hingewiesen, dass die hier beschriebenen Merkmale für eine Vorrichtung wie für ein Verfahren entsprechend zur Anwendung kommen können und beliebig miteinander kombiniert werden können.

Das Prinzip der vorliegenden Erfindung wird nun anhand eines Beispiels in den beigefügten Zeichnungen näher erläutert. Hierbei zeigen:
- Fig. 1: eine schematische Darstellung einer Anzeigevorrichtung mit einem Anzeigeinhalt zu einem ersten Zeitpunkt; und
- Fig. 2: die Anzeigevorrichtung der Fig. 1 mit einem Anzeigeinhalt zu einem zweiten Zeitpunkt.

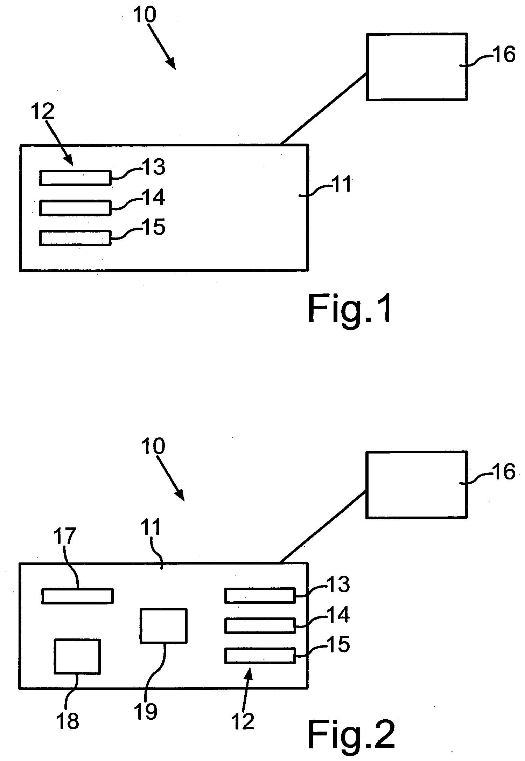

Fig. 1 zeigt schematisch eine Anzeigevorrichtung 10 mit einer Anzeigefläche 11, die einen Anzeigeinhalt mit Auswahlmöglichkeiten 12 in Form von Verknüpfungen an einer ersten Position zu einem ersten Zeitpunkt aufweist. Die Auswahlmöglichkeiten 12 werden als Verknüpfungen 13, 14, 15 bereitgestellt, wobei jede der Verknüpfungen 13, 14, 15 einen Link darstellt, der bei Auswählen zur Darstellung weiterer Inhalte führt. Die Liste mit Verknüpfungen 12 oder die Link-Sammlung 12, wird zunächst an einer erste Position auf der Anzeigeoberfläche 11 der Anzeigevorrichtung 10 angezeigt. Dies geschieht in Fig. 1 im rechten Bereich der Anzeigeoberfläche 11. Ferner weist die Anzeigevorrichtung 10 eine Steuereinheit 16 auf, die den Inhalt und die Position der Link-Sammlung 12 steuert und gleichzeitig eine mögliche Bedienung der Anzeigefläche durch Erkennen einer Auswahl überwacht.

Fig. 2 zeigt die Anzeigevorrichtung 10 der Fig. 1 mit einem Anzeigeinhalt an einer zweiten Position zu einem zweiten Zeitpunkt, der sich nach Abschluss des Anzeigeaufbaus ergibt. Der Anzeigeinhalt weist weiterhin die Link-Sammlung 12, einen weiteren Link 17 und zusätzlich Grafiken 18, 19 auf, die in der Zwischenzeit mit Hilfe der Steuereinheit 14 geladen wurden und nun auf der Anzeigefläche 11 angezeigt werden. In der Zwischenzeit hat sich auch die Position der Link-Sammlung 12 verändert, die in Fig. 1 eine vorläufige Position eingenommen hatte, und in Fig. 2 an ihrer endgültigen Position vorhanden ist. Es findet somit ein Positionsversatz der Auswahlmöglichkeiten 12 bzw. der Link-Sammlung 12 statt, während ein Benutzer eine Bedienung vornehmen kann.

Der Benutzer wählt beispielsweise in Fig. 1 den oberen Link 13 als Auswahlmöglichkeit aus, wobei die Auswahl durch Berühren der Anzeigefläche oder durch berührungsloses Eye Tracking bzw. Augen-Verfolgens von der Steuereinheit 16 erkannt wird. Im Falle eines Eye Trackings steht die Steuereinheit zusätzlich mit einer Kamera in Verbindung, die beispielsweise als Infrarot-Kamera ausgebildet ist und in Richtung auf die Augen des Nutzers gerichtet ist. Hierbei wertet die Kamera die Augenbewegungen des Nutzers aus, durch beispielsweise Vergleich der Blickrichtung der beiden Augen anhand von generierten Vektoren. Durch die Augenbewegung bzw. durch eine bestimmte Blickrichtung kann mit den Augen eine Auswahl berührungslos getroffen werden. Diese Auswahl kann dann gegebenenfalls mit einer weiteren Einrichtung bestätigt werden, beispielsweise einer physikalischen Taste einer Tastatur oder eines Auswahlknopfes beispielsweise in einem Fahrzeug. Ferner kann die Steuereinheit 16 über eine Funkschnittstelle mit der Anzeigevorrichtung 10 verbunden sein, so dass die Steuereinheit 16 als Cloud-Prozesseinheit ausgebildet ist und Teil einer Cloud-Technologie ist.

Während die Steuereinheit 16 weiter den Anzeigeinhalt auf der Anzeigefläche 11 aufbaut trifft der Nutzer eine Auswahl an der vorläufigen Position, wie in Fig. 1 gezeigt, obwohl sich die Link-Sammlung 12 bereits an ihrer endgültigen Position befindet, wie in Fig. 2 gezeigt. Dennoch berücksichtigt die Steuereinheit 16 den Anzeigeinhalt, den sie zuvor in der vorläufigen Position angezeigt hatte bei der Auswahl des Nutzers. Somit wählt der Nutzer einen Link 13 in seiner vorläufigen Position aus, wie in Fig. 1 gezeigt, obwohl der Anzeigevorrichtung 10 den ausgewählten Link 13 bereits an seiner endgültigen Position darstellt, wie in Fig. 2 gezeigt. Durch die Aktivierung des Links 13 erzeugt die Steuereinheit 16 einen neuen Inhalt auf der Anzeigefläche 11, die dem gewünschten Inhalt des ausgewählten Links 13 entspricht. Auf diese Weise kann eine Fehlauslösung des Links 17, der nun an der Position des zuvor angezeigten Links 13 vorhanden ist, vermieden werden. Obwohl der Nutzer den Link 17 bei der Auswahl berührt, wird der Inhalt des Links 13 schließlich angezeigt. Eine Fehlauslösung wird durch eine vorbestimmte Zeitdauer zur Aktivierung des Links 13 vermieden.

Insgesamt wird eine stabilere Interaktion bei Nutzung aufbauender Inhalte, wie Internetseiten, durch Zeiterhebung zwischen Bildaufbau und Auswahl bzw. einem Tap erreicht. Es wird die Anzahl von Fehlauslösungen reduziert, indem ein Zeitverzug zwischen der Auswahl einer Auswahlmöglichkeit und der Auswertung der Auswahl berücksichtigt wird. Hierbei baut sich der Anzeigeinhalt von einer vorläufigen Position zu einer endgültige Position aufbaut, ohne dass der Aufbauvorgang zeitverzögert wird.

## Patentansprüche

1. Verfahren zum Bereitstellen einer Auswahlmöglichkeit (13, 14, 15) während eines Aufbaus eines Anzeigeinhalts auf einer Anzeigefläche (11) einer Anzeigevorrichtung (10), aufweisend
Anzeigen eines vorläufigen Anzeigeinhalts an einer vorläufigen Position auf der Anzeigefläche (11) zu einem ersten Zeitpunkt, wobei der vorläufige Anzeigeinhalt mindestens eine Auswahlmöglichkeit (13, 14, 15) an einer ersten Position aufweist;
Erkennen eines Auswählens aus mindestens einer der Auswahlmöglichkeiten (13, 14, 15) an der ersten Position auf der Anzeigefläche (11); Anzeigen eines endgültigen Anzeigeinhalts an einer endgültigen Position auf der Anzeigefläche (11) zu einem zweiten Zeitpunkt;
**dadurch gekennzeichnet dass**
das Auswählen aus mindestens einer der Auswahlmöglichkeiten (13, 14, 15) an der ersten Position zu dem zweiten Zeitpunkt als eine Auswahl erkannt wird, während der endgültige Anzeigeinhalt bereits an der endgültigen Position auf der Anzeigefläche (11) angezeigt wird, wobei der endgültige Anzeigeinhalt die mindestens eine Auswahlmöglichkeit (13, 14, 15) an der zweiten Position aufweist und zwischen der ersten Position und der zweiten Position ein Positionsversatz stattfindet.

2. Verfahren nach Anspruch 1, wobei die Auswahlmöglichkeit eine Verknüpfung ist, bei deren Auswahl weitere Anzeigeinhalte angezeigt werden.

3. Verfahren nach Anspruch 1 oder Anspruch 2, wobei innerhalb einer vorbestimmten Zeitdauer das Auswählen an der ersten Position als Auswählen der Auswahlmöglichkeit erkannt wird.

4. Verfahren nach Anspruch 3, wobei die vorbestimmte Zeitdauer 0,5 bis 1,0 Sekunden, vorzugsweise 0,8 Sekunden, beträgt.

5. Verfahren nach einem der Ansprüche 1 bis 4, wobei das Auswählen durch eine Berührung der Anzeigefläche (11) durchgeführt wird.

6. Verfahren nach einem der Ansprüche 1 bis 4, wobei das Auswählen berührungslos durchgeführt wird.

7. Anzeigevorrichtung (10) mit sich zeitlich aufbauendem Anzeigeinhalt, aufweisend
eine Anzeigefläche (11) zum Anzeigen des Anzeigeinhalts (11);
eine Steuereinheit (16) zum Erkennen einer Auswahl auf der Anzeigefläche (11),
wobei ein vorläufiger Anzeigeinhalt an einer vorläufigen Position auf der Anzeigefläche (11) zu einem ersten Zeitpunkt anzeigbar ist, wobei der vorläufige Anzeigeinhalt mindestens eine Auswahlmöglichkeit (13, 14, 15) an einer ersten Position aufweist;
wobei mit der Steuereinheit (16) eine Auswahl aus mindestens einer der Auswahlmöglichkeiten (13, 14, 15) an der ersten Position auf der Anzeigefläche (11) erkennbar ist;
wobei ein endgültiger Anzeigeinhalt an einer endgültigen Position auf der Anzeigefläche (11) zu einem zweiten Zeitpunkt anzeigbar ist;
**dadurch gekennzeichnet dass**
mit der Steuereinheit (16) eine Auswahl mindestens einer der Auswahlmöglichkeiten (13, 14, 15) an der ersten Position zu dem zweiten Zeitpunkt als Auswählen erkennbar ist, während der endgültige Anzeigeinhalt bereits an der endgültigen Position auf der Anzeigefläche (11) angezeigt wird, wobei der endgültige Anzeigeinhalt die mindestens eine Auswahlmöglichkeit (13, 14, 15) an der zweiten Position aufweist und zwischen der ersten Position und der zweiten Position ein Positionsversatz stattfindet.

8. Anzeigevorrichtung nach Anspruch 7, wobei die Anzeigevorrichtung (10) eine berührungssensitive Anzeigevorrichtung ist.

9. Anzeigevorrichtung nach Anspruch 7 oder Anspruch 8, wobei die Anzeigevorrichtung (10) eine Projektionsvorrichtung ist.

10. Fahrzeug mit installierter Anzeigevorrichtung (10) nach einem der Ansprüche 7 bis 9, wobei die Anzeigevorrichtung (10) Teil eines Informationssystems in dem Fahrzeug ist.

## Claims

1. Method for providing a selection option (13, 14, 15) during the setup of a display content on a display panel (11) of a display device (10), comprising
displaying a temporary display content in a temporary position on the display panel (11) at a first time point, wherein the temporary display content comprises at least one selection option (13, 14, 15) in a first position,
identifying a selection from at least one of the selection options (13, 14, 15) in the first position on the display panel (11);
displaying a final display content in a final position on the display panel (11) at a second time point,
**characterised in that**
the selection of at least one of the selection options (13, 14, 15) in the first position at the second time point is identified as a selection, whereas the final display content is already displayed in the final position on the display panel (11), wherein the final display content comprises the at least one selection option (13, 14, 15) in the second position and there is a position misalignment between the first position and the second position.

2. Method according to claim 1, wherein the selection option is a link that, when selected, prompts further display contents to be displayed.

3. Method according to claim 1 or claim 2, wherein within a predetermined time period the selection in the first position is identified as the selection of the selection option.

4. Method according to claim 3, wherein the predetermined time period is 0.5 to 1.0 seconds, preferably 0.8 seconds.

5. Method according to any of claims 1 to 4, wherein the selection is made by contacting the display device (11).

6. Method according to any of claims 1 to 4, wherein the selection is performed without making contact.

7. Display device (10) having a display content that is set up over time, comprising a display panel (11) for displaying the display content (11),
a controller (16) for identifying a selection on the display panel (11),
wherein a temporary display content in a temporary position can be displayed on the display panel (11) at a first time point, wherein the temporary display content comprises at least one selection option (13, 14, 15) in a first position,
wherein by means of the controller (16) a selection of at least one of the selection options (13, 14, 15) in the first position can be identified on the display panel (11),
wherein a final display content in a final position can be displayed on the display panel (11) at a second time point,
**characterised in that** the
by means of the controller (16) a selection of a least one of the selection options (13, 14, 15) in the first position at the second time point can be identified as the selection, whereas the final display content is already displayed in the final position on the display panel (11), wherein the final display content comprises the at least one selection option (13, 14, 15) in the second position and there is a position misalignment between the first position and the second position.

8. Display device according to claim 7, wherein the display device (10) is a touch-sensitive display device.

9. Display device according to claim 7 or claim 8, wherein the display device (10) is a projection device.

10. Vehicle with an installed display device (10) according to any of claims 7 to 9, wherein the display device (10) is part of an information system in the vehicle.

## Revendications

1. Procédé de fourniture d'une possibilité de sélection (13, 14, 15) pendant une construction d'un contenu d'affichage sur une surface d'affichage (11) d'un dispositif d'affichage (10), comprenant
l'affichage d'un contenu d'affichage provisoire à une position provisoire sur la surface d'affichage (11) à un premier instant, dans lequel le contenu d'affichage provisoire comprend au moins une possibilité de sélection (13, 14, 15) à une première position ;
la reconnaissance d'une sélection parmi au moins une des possibilités de sélection (13, 14, 15) à la première position sur la surface d'affichage (11) ;
l'affichage d'un contenu d'affichage définitif à une position définitive sur la surface d'affichage (11) à un second instant ;
**caractérisé en ce que**
la sélection parmi au moins une des possibilités de sélection (13, 14, 15) à la première position au second instant est reconnue en tant que sélection pendant que le contenu d'affichage définitif est déjà affiché à la position définitive sur la surface d'affichage (11), dans lequel le contenu d'affichage définitif comprend l'au moins une possibilité de sélection (13, 14, 15) à la seconde position et un décalage de position a lieu entre la première position et la seconde position.

2. Procédé selon la revendication 1, dans lequel la possibilité de sélection est une combinaison lors de la sélection de laquelle d'autres contenus d'affichage sont affichés.

3. Procédé selon la revendication 1 ou la revendication 2, dans lequel à l'intérieur d'une durée prédéterminée, la sélection à la première position est reconnue en tant que sélection de la possibilité de sélection.

4. Procédé selon la revendication 3, dans lequel la durée prédéterminée est de 0,5 à 1,0 seconde, de préférence 0,8 seconde.

5. Procédé selon l'une quelconque des revendications 1 à 4, dans lequel la sélection est effectuée par un contact avec la surface d'affichage (11).

6. Procédé selon l'une quelconque des revendications 1 à 4, dans lequel la sélection est effectuée sans contact.

7. Dispositif d'affichage (10) avec un contenu d'affichage se construisant dans le temps, comprenant
une surface d'affichage (11) pour l'affichage du contenu d'affichage (11) ;
une unité de commande (16) pour la détection d'une sélection sur la surface d'affichage (11),
dans lequel un contenu d'affichage provisoire peut être affiché à une position provisoire sur la surface d'affichage (11) à un premier instant, dans lequel le contenu d'affichage provisoire comprend au moins une possibilité de sélection (13, 14, 15) à une première position ;
dans lequel avec l'unité de commande (16), une sélection parmi au moins une des possibilités de sélection (13, 14, 15) peut être reconnue à la première position sur la surface d'affichage (11) ;
dans lequel un contenu d'affichage définitif peut être affiché à une position définitive sur la surface d'affichage (11) à un second instant ;
**caractérisé en ce que**
avec l'unité de commande (16), une sélection d'au moins une des possibilités de sélection (13, 14, 15) peut être reconnue à la première position au second instant en tant que sélection pendant que le contenu d'affichage définitif est déjà affiché à la position définitive sur la surface d'affichage (11), dans lequel le contenu d'affichage définitif comprend l'au moins une possibilité de sélection (13, 14, 15) à la seconde position et un décalage de position a lieu entre la première position et la seconde position.

8. Dispositif d'affichage selon la revendication 7, dans lequel le dispositif d'affichage (10) est un dispositif d'affichage sensible au contact.

9. Dispositif d'affichage selon la revendication 7 ou la revendication 8, dans lequel le dispositif d'affichage (10) est un dispositif de projection.

10. Véhicule avec un dispositif d'affichage installé (10) selon l'une quelconque des revendications 7 à 9, dans lequel le dispositif d'affichage (10) fait partie d'un système d'informations dans le véhicule.
